Europäisches Patentamt

European Patent Office

Office européen des brevets

(11) Numéro de publication: **0 104 115**
**A2**

## (12) DEMANDE DE BREVET EUROPEEN

(21) Numéro de dépôt: **83401787.3**

(22) Date de dépôt: **13.09.83**

(51) Int. Cl.³: **G 02 B 27/00**
**G 02 B 5/32**

(30) Priorité: **21.09.82 FR 8215907**

(43) Date de publication de la demande:
**28.03.84 Bulletin 84/13**

(84) Etats contractants désignés:
**DE GB IT SE**

(71) Demandeur: **THOMSON-CSF**
**173, Boulevard Haussmann**
**F-75379 Paris Cedex 08(FR)**

(72) Inventeur: **Arondel, Patrick**
**THOMSON-CSF SCPI 173, bld Haussmann**
**F-75379 Paris Cedex 08(FR)**

(72) Inventeur: **Gauthier, François Hugues**
**THOMSON-CSF SCPI 173, bld Haussmann**
**F-75379 Paris Cedex 08(FR)**

(72) Inventeur: **Levaillant, Denis**
**THOMSON-CSF SCPI 173, bld Haussmann**
**F-75379 Paris Cedex 08(FR)**

(74) Mandataire: **Trocellier, Roger et al,**
**THOMSON-CSF SCPI 173, Bld Haussmann**
**F-75379 Paris Cedex 08(FR)**

(54) **Dispositif viseur à champ instantané agrandi comportant un miroir, et procédé de fabrication de ce miroir.**

(57) L'invention concerne un dispositif viseur du type à champ instantané agrandi au moyen d'un miroir holographique hors axe (5) qui réfléchit les rayons incidents ($\alpha2$) dans une direction différente ($\alpha1$) par rapport à sa normale (N). Le miroir holographique (5) est dans une position telle que le champ instantané (CIH) de l'oeil (1) d'un observateur est égal au champ total d'une source lumineuse collimatée, réfléchie sur ce miroir holographique (5). Le miroir holographique (5) peut être est enregistré au moyen de deux sources lumineuses monochromatiques cohérentes situées dans des directions $\alpha1$ et $\alpha2$, à l'infini de part et d'autre du miroir holographique ou avec deux sources ponctuelles non à l'infini.

Fig.3

1

# DISPOSITIF VISEUR A CHAMP INSTANTANE AGRANDI
## COMPORTANT UN MIROIR
## ET PROCEDE DE FABRICATION DE CE MIROIR

L'invention concerne un dispositif viseur à champ instantané agrandi, permettant l'observation en superposition d'un paysage et d'un ensemble d'indications lumineuses collimatées et réfléchies par ce dispositif viseur.

On connaît par l'art antérieur des solutions viseur comportant un objectif optique collimateur et une lame partiellement réfléchissante à faces parallèles pour superposer un paysage observé avec l'image collimatée d'une source lumineuse. On entend par source lumineuse un ensemble formé d'un ou de plusieurs objets lumineux dont la forme et la disposition sont représentatives des indications lumineuses à réfléchir. Il est connu que le champ instantané de vision de la source lumineuse visible par un observateur est déterminé par les positions relatives de l'oeil et de la lame par rapport à l'objectif du collimateur. De manière à augmenter le champ instantané perçu par l'observateur on a recours à l'utilisation d'une double lame partiellement réfléchissante à faces parallèles. Les positions différentes de chacune de ces deux lames permettent d'agrandir la pupille de sortie et donc le champ instantané . Un tel dispositif est décrit dans le brevet français n° 77 13343 publié sous le n° 2 389 911.

La réalisation d'une double lame est cependant délicate. D'une part les conditions de parallélisme, auxquelles est soumise la construction de ces doubles lames, sont rigoureuses ; pour avoir un bon résultat du dispositif viseur ainsi conçu il ne faut tolérer un écart de parallélisme entre les deux lames qu'inférieur à 20 secondes d'angle environ. Ces dispositifs viseurs devant être souvent installés sur des mobiles, en particulier sur des avions, il importe de plus de réaliser un bâti solide et qui peut être encombrant de telle manière que les vibrations du mobile n'entraînent pas le désalignement des lames.

D'autre part, l'une des deux lames partiellement réfléchissante réfléchit en direction de l'oeil de l'observateur des rayons lumineux ayant traversé l'autre lame. En conséquence il s'avère nécessaire que cette dernière laisse passer suffisamment les rayons lumineux à destination de la première citée,et donc l'image de la source lumineuse collimatée sera moins lumineuse.

L'invention a pour objet un dispositif de visée à champ instantané agrandi muni d'une lame unique partiellement réfléchissante ne présentant pas les inconvénients précités en utilisant une lame unique partiellement réfléchissante constituée par un miroir holographique hors d'axe.

L'invention propose un dispositif viseur à champ instantané agrandi, comportant un miroir partiellement réfléchissant assurant la superposition d'un paysage observé avec l'image d'une source lumineuse collimatée par un objectif optique, caractérisé en ce que le miroir est un miroir holographique hors d'axe pour réfléchir selon une direction différente de celle d'incidence et produire une image agrandie de la pupille de l'objectif et consécutivement un champ instantané d'observation agrandi et en ce que la normale au milieu de ce miroir est inclinée sur l'axe optique de l'objectif et sur l'axe normal de visée du viseur selon respectivement les angles directeurs d'incidence et de réflexion de ce miroir hors d'axe.

L'invention sera mieux comprise par la description suivante donnée à titre d'exemple non limitatif et illustrée par les figures qui l'accompagnent. Sur ces différentes figures les mêmes repères désignent les mêmes éléments. Pour des raisons de clarté les cotes et proportions des divers éléments ne sont pas respectées. Ces figures représentent :

- figure 1, un shéma montrant l'agrandissement du champ instantané d'un dispositif viseur selon l'invention ;

- figure 2, L'image de la pupille de sortie de l'objectif du collimateur d'un dispositif viseur conforme à l'invention ;

3

- figure 3, un dispositif viseur muni du miroir holographique hors d'axe selon l'invention ;

- figure 4, les diagrammes de tolérance angulaire des rayons incidents et réfléchis par le miroir holographique hors d'axe ;

- figure , un shéma relatif à un procédé d'enregistrement du miroir holographique hors d'axe selon l'invention ;

- figure 6, une variante de réalisation de l'enregistrement précédent.

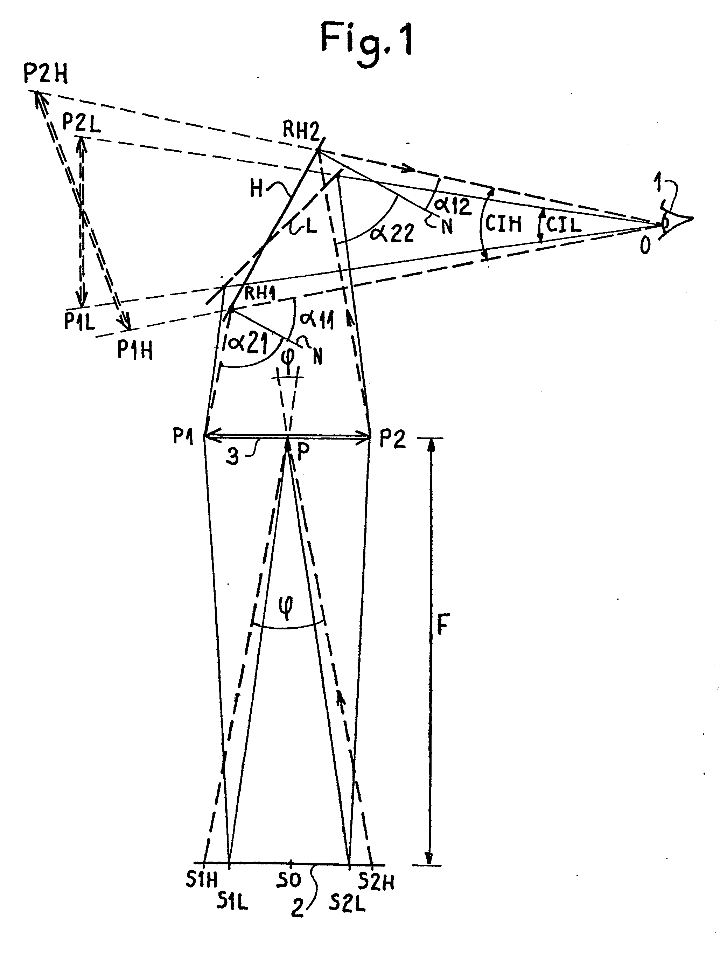

Sur la figure 1, on distingue l'oeil 1 d'un observateur observant par réflexion sur une lame partiellement réfléchissante H, constitué par le miroir holographique hors d'axe de l'invention, l'image d'une source lumineuse 2 collimatée par un objectif 3 : c'est-à-dire renvoyée à l'infinie. Le contour de l'objectif 3 représente une pupille P1 P2, de centre P.

Le champ total est le champ observable à travers l'objectif . il ne dépend que de la dimension de la source 2 et de la focale F de l'objectif 3 : il est représenté par l'angle $\varphi$ . Le champ instantané est celui observable par l'oeil à un instant donné ; il ne dépend que de la dimension de l'image de la pupille de l'objectif vue à travers la lame partiellement réfléchissante, et de la position de l'oeil par rapport à cet objectif et donc par rapport au miroir ; il est égal à l'angle CIH sous lequel de l'oeil on voit l'objectif.

Le miroir holographique H est dit hors d'axe car il a la propriété, en tous ses points, de réfléchir un rayon lumineux incident dans une direction différente de la direction symétrique du rayon incident par rapport à la normale N au miroir au point de reflexion considéré. En conséquence, la bissectrice de l'angle formée en chaque point par un rayon incident et un rayon réfléchi, ne coïncide pas avec la normale en ce point. Il est à noter que le miroir holographique H est moins incliné par rapport au plan de l'objectif 3 qu'une lame classique L également représentée pour comparaison. En un point RH1, un rayon, incident sous un angle $\alpha 21$, est réfléchi sous un angle $\alpha 11$, différent de $\alpha 21$ en un point RH2 un rayon, incident

4

sous un angle $\alpha 22$, est réfléchi sous un angle $\alpha 12$, différent de $\alpha 22$. Les rayons réfléchis convergent en un point 0 où est placé l'oeil l. Les rayons considérés, P1-RH1-O et P2 - RH2 - 0 sont tracés en tirets sur la figure l. L'ouverture angulaire RH1-0-RH2 notée CIH est supérieure à l'ouverture angulaire CIL donnée par la lame classique L.

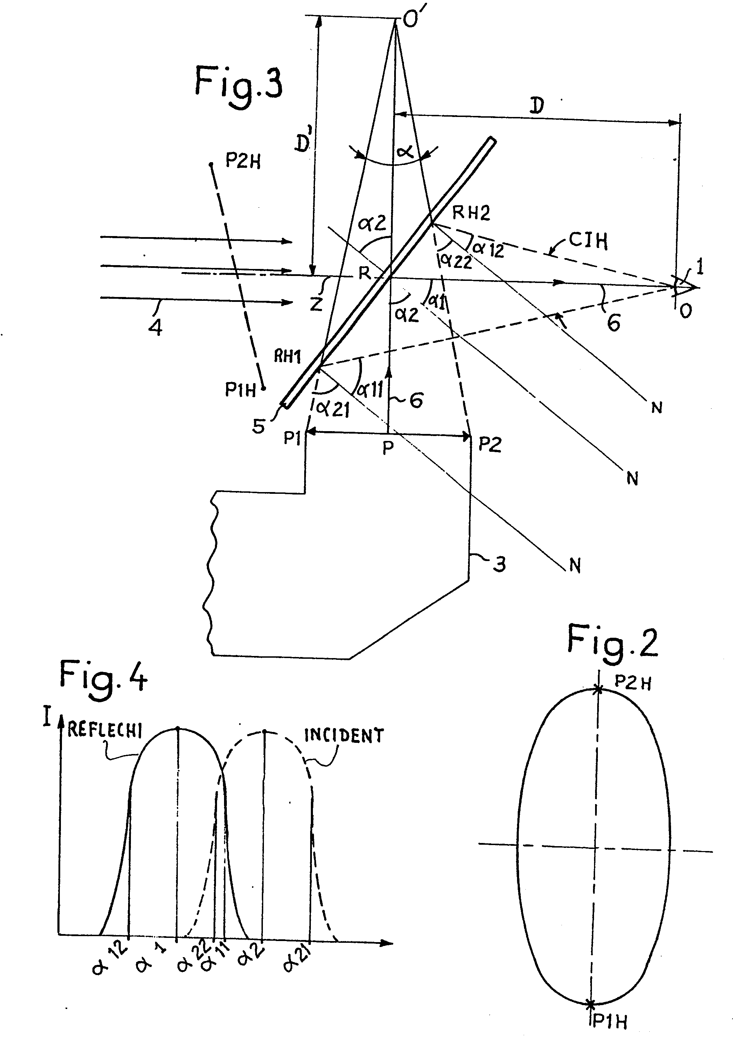

Les rayons P1-RH1 et P2-RH2, sont respectivement parallèles aux rayons S1H-P et S2H-P qui déterminent une étendue, S1H-S2H, de la source lumineuse 2 dans le plan focal, supérieure à celle, S1L-S2L, avec la lame semi-réfléchissante L. Ce sont les rayons extrêmes utiles à la représentation de toute la source 2. L'image P1H-P2H de la pupille P1 - P2 apparaît vue de face sur la figure 2, où son allure est celle d'un ovale. P1H (Fig.1) est tel qu'il se trouve sur le prolongement du rayon réfléchi RH1-0 à une distance P1H-RH1 égale à la distance P1-RH1. De même la distance P2H-RH2 est égale à la distance P2 - RH2 et P2H se trouvant sur le prolongement du rayon lumineux RH2-0. Cette image de pupille est également plus grande que l'image P1L-P2L de la pupille donnée par la lame partiellement réfléchissante L.

Sur la figure 3 reprenant les mêmes éléments on distingue également le dispositif viseur muni du miroir holographique hors d'axe 5 selon l'invention. Les rayons lumineux 4, en provenance du paysage observé, sont transmis à travers le miroir holographique 5, en direction de l'oeil 1 d'un observateur placé au point 0. Ce point est séparé du milieu R du miroir par une distance D. Le rayon lumineux axial 6, en provenance à travers l'objectif 3 de la source lumineuse collimatée non représentée, est réfléchi en R au milieu du miroir holographique 5, et coïncide avec l'axe optique de l'objectif. Ce rayon 6 est réfléchi en direction de l'oeil 1 de l'observateur par réflexion sur le miroir holographique 5. Ce rayon réfléchi coïncide avec la direction normale de visée du viseur, axe Z. Ce miroir holographique 5 d'un type hors d'axe a la particularité de renvoyer, dans une direction faisant un angle dit directeur, $\alpha 1$, par rapport à sa normale N, des rayons incidents à ce miroir holographique sous un

5

angle dit directeur, $\alpha2$ différent, par rapport à sa normale. On remarque donc que les angles $\alpha1$ et $\alpha2$, faits par l'axe optique et l'axe Z avec la normale ne sont pas égaux. Ce miroir 5, est d'une manière préférée, plan sans que cela soit une obligation.

Une particularité des miroirs holographiques est de tolérer une légère variation de l'angle d'incidence des rayons émis et réfléchis. Ainsi le rayon P1-RH1, incident à la plaque holographique avec un angle $\alpha21$, se réfléchi en RH1-O avec un angle $\alpha11$ par rapport à la normale en R1 à ce miroir holographique. Il en est de même pour P2-RH2 et RH2-O faisant respectivement des angles $\alpha22$ et $\alpha12$ avec la normale en R2 au miroir holographique 5. Les variations angulaires $\alpha21$-$\alpha22$ ou $\alpha11$-$\alpha12$ rendent compte de la tolérance angulaire, sur l'onde incidente et sur l'onde réfléchie respectivement, conférée par le miroir holographique 5. En dehors de la tolérance angulaire d'incidence les rayons ne sont pas réfléchis par le miroir holographique 5.

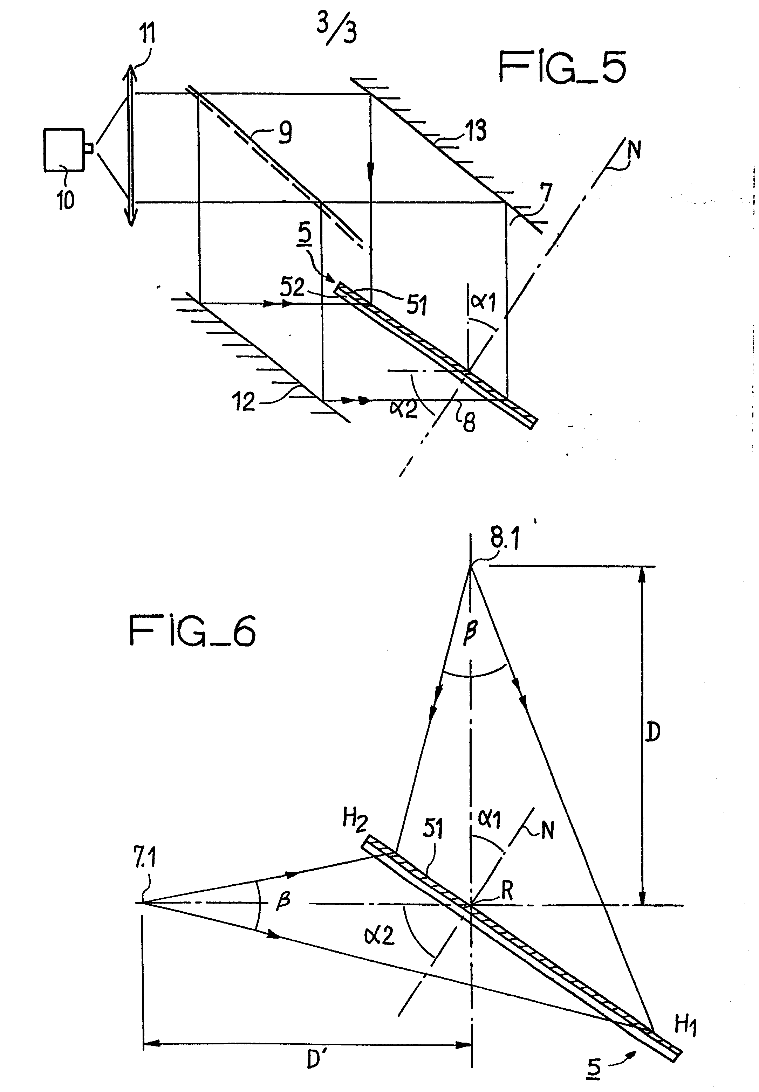

La figure 4 représente les variations d'intensité, en fonction de leur angle, des rayons incidents (courbes en pointillés) et des rayons réfléchis (courbe en traits continus). Les tolérences angulaires s'expriment ainsi sous forme d'une bande passante angulaire en incidence et d'une bande passante angulaire en réflexion. Ces bandes passantes angulaires sont centrées sur les valeurs des angles directeurs du miroir holographique. Ceci signifie que pour pouvoir être réfléchi avec efficacité un rayon incident d'intensité donnée devra attaquer le miroir holographique hors d'axe avec une incidence comprise entre les limites de la bande passante. Les limites de la bande passante sont des angles pour lesquels des rayons incidents, d'intensité donnée, sont peu réfléchis. La perte limite d'intensité en réflexion peut dans un exemple être fixée à 80° environ. On voit sur la figure 5 à cet effet que $\alpha22$ et $\alpha21$, respectivement plus petits et plus grands que $\alpha2$, sont des angles compris dans la bande passante angulaire incidente du miroir holographique hors d'axe. Ces rayons incidents sont réfléchis, respectivement, selon des directions présentant avec la normale au miroir holographique 5 des angles $\alpha12$ et

6

α11. L'angle α12 est bien entendu inférieur à α1 et α11 est supérieur à α1.

On remarque que le champ instantané CIH, autorisé par le dispositif est égal à (α21 - α22). En prolongeant les rayons P1-RH1 et P2-RH2 à travers le miroir holographique 5 on obtient un point de convergence 0'. L'ouverture angulaire correspondante est notée α. Le point 0' ainsi défini est séparé du milieu R du miroir par une distance D'.

On remarque que si les tolérances angulaires (α21 - α22) et (α11 - α12) sont suffisamment grandes pour inclure toutes les directions, des rayons provenant de la source lumineuse collimatée, le champ instantané de la source, visible par l'oeil 1 d'un observateur à travers un tel miroir holographique 5, sera égal au champ total de la source lumineuse collimatée. Le miroir holographique de l'invention peut être réalisé avec cette propriété.

La figure 2 montre, par réflexion sur l'hologramme 5, l'image P1H-P2H de la pupille P1-P2 de l'objectif 3. La figure 2 présente de face cette image P1H-P2H, agrandie en site, de la pupille P1-P2. En conséquence on constate bien que le miroir holographique selon l'invention permet de percevoir un champ instantané agrandi par rapport à celui observable conventionnellement avec une seule lame. On peut montrer par un calcul que l'agrandissement du champ est proportionnel à cos α1/cos α2.

La figure 5 illustre en coupe le procédé de fabrication du miroir holographique hors d'axe 5. Pour réaliser l'enregistrement on soumet la couche 51 en matériau photosensible supportée par un support plan transparent 52, à l'interférence de deux ondes planes 7 et 8 monochromatiques, cohérentes entre elles, et se propageant respectivement par rapport à la normale N à la couche 51 de matériau photosensible avec des angles d'incidence différents égaux respectivement aux angles directeurs α2 et α1. Les ondes planes 7 et 8 peuvent être obtenues en procédant à la séparation, par une lame partiellement réfléchissante 9, en deux directions distinctes, du rayonnement d'une source 10 unique, ponctuelle, monochromatique,

7

cohérente, collimatée par un objectif 11. On dirige, par réflexion sur deux miroirs 12 et 13, les deux rayonnements ainsi obtenus de telle manière qu'ils éclairent la couche de matériaux photosensible selon les incidences requises. Dans un exemple, la couche 51 de matériau photosensible sera de la gélatine bichromatée. Elle est appliquée en forte épaisseur, c'est-à-dire de l'ordre de quelques dizaines de fois la longueur d'onde de l'onde lumineuse incidente, en sorte que le miroir holographique ait un très bon rendement à la fois en réflexion en transmission.

Les surfaces équiphases, enregistrées dans la couche 51 de matériau photosensible du miroir holographique 5, présentent une certaine inclinaison par rapport à la surface de cette couche 51. Le miroir holographique hors d'axe ainsi enregistré présente un certain chromatisme. Ce chromatisme se manifeste par une certaine différence de l'angle de réflexion pour deux rayons lumineux présentant le même angle d'incidence sur le miroir holographique hors d'axe mais dont les longueurs d'onde sont différentes. On compense ce chromatisme lors de l'utilisation du viseur en utilisant des sources lumineuses collimatées (source 2 sur la Fig. 1)très monochromatiques, c'est-à-dire dont le spectre est large de quelques angströms. Dans un exemple, cette source lumineuse collimatée est une matrice de cristaux liquides éclairée par un laser.

On a dit plus haut que les largeurs de tolérance angulaire du miroir holographique 5, respectivement en incidence et en réflexion, égales à ($\alpha$21 - $\alpha$22) et ($\alpha$11 - $\alpha$12) autorisaient pour le dispositif selon l'invention, un champ instantané CIH. En fait cette considération est liée à la nature des sources lumineuses 7 et 8 ayant servi à enregistrer le miroir holographique hors d'axe. Ces sources lumineuses 7 et 8 étant constitué de rayons parallèles,tous les points du miroir holographique 5 seront enregistrés avec des mêmes angles directeurs égaux respectivement à $\alpha$2 et $\alpha$1. En particulier le point RH2 du miroir holographique 5 (figure 3) pour pouvoir réfléchir dans la direction RH2-O un rayon reçu provenant de P2, impose les tolérances respectivement ($\alpha$2, $\alpha$22) et ($\alpha$1, $\alpha$12) en incidence et en réflexion.

8

On peut remarquer que les rayons lumineux provenant de RH2 et reçus par l'oeil 1 de l'observateur ont toujours l'orientation RH2 -O. Sachant que l'oeil d'un observateur, utilisant un dispositif viseur, se déplace peu par rapport à sa position normale d'observation en O et que d'autre part dans un dispositif viseur, le miroir est fixe par rapport à la pupille P1P2 de l'objectif 3, il est intéressant de privilégier, en chacun de ses points, l'enregistrement d'incidences particulières désirées. Par exemple au point RH1 ces angles d'incidence sont $\alpha 21$ et $\alpha 11$, au point R ils sont $\alpha 2$ et $\alpha 1$, et au point RH2 ils sont $\alpha 22$ et $\alpha 12$. Il y a lieu d'enregistrer bien entendu les points intermédiaires entre RH1 et RH2 avec des incidences intermédiaires entre ces dernières valeurs. Pour obtenir ce résultat il faut tout simplement utiliser des sources lumineuses ponctuelles placées à l'endroit des points O et O' sur la figure 4. Si la position normale d'observation est différente du point 0 les sources ponctuelles sont disposées d'une manière correspondante en O' et en cette autre position normale d'observation.

Cette dernière constatation enseigne une manière en variante de réaliser l'enregistrement du miroir holographique hors d'axe 5 visible sur la figure 6. On distingue un miroir holographique 5 et des sources lumineuses ponctuelles 7.1 et 8.1. Ces sources lumineuses ponctuelles 7.1 et 8.1 sont monochromatiques et cohérentes entre elles. Leurs rayonnements se propagent selon des ondes sphériques. On remarque de plus qu'elles sont éloignées du milieu R de la plaque holographique 5 respectivement d'une distance égale à D et à D'. La distance D est la même que celle qui séparera, dans l'utilisation du dispositif viseur, l'oeil au point O du milieu R de ce miroir holographique 5 enregistré. La distance D' est telle que l'angle $\beta$ sous lequel de la source 7.1 on voit l'hologramme (angle H1- 7.1 - H2) est égal à l'angle $\beta$ sous lequel de la source 8.1 on voit la même portion d'hologramme (angle H1 -8.1 - H2). Les sources lumineuses 7.1 et 8.1 sont placées dans des directions faisant des angles respectivement $\alpha 2$ et $\alpha 1$ par rapport à la normale N au milieu R de ce miroir holographique. On sait réaliser le montage optique permettant la

9

mise en place exacte des sources lumineuses 7.1 et 8.1 et de la plaque photosensible devant être transformée en miroir holographique hors d'axe 5. Ce montage ressemble à celui de la Fig. 5 dans lequel l'objectif 11 aurait été enlevé.

L'invention s'applique aux dispositifs viseur utilisés dans les avions modernes comme accessoire de navigation ou comme acces- soire de tir.

10

# R E V E N D I C A T I O N S

1. Dispositif viseur à champ instantané agrandi, comportant un miroir (5) partiellement réfléchissant assurant la superposition d'un paysage observé avec l'image d'une source lumineuse (2) collimatée par un objectif optique (3), caractérisé en ce que le miroir est un miroir holographique hors d'axe pour réfléchir selon une direction ($\alpha 1$) différente de celle d'incidence ($\alpha 2$) et produire une image (P1H,P2H) agrandie de la pupille (P1,P2) de l'objectif et consécutivement un champ instantané d'observation agrandi et en ce que la normale (N) au milieu (R) de ce miroir est inclinée sur l'axe optique de l'objectif (PR) et sur l'axe normale de visée (Z) du viseur selon respectivement les angles directeurs d'incidence ($\alpha 2$) et de réflexion ($\alpha 1$) de ce miroir hors d'axe.

2. Dispositif selon la revendication 1, caractérisé en ce que l'enregistrement (51) du miroir hors d'axe est obtenu par l'interférence de deux ondes planes (7,8).

3. Dispositif viseur selon la revendication 1, caractérisé en ce que l'enregistrement (51) du miroir hors d'axe est obtenu par l'interférence de deux ondes sphériques.

4. Dispositif viseur selon l'une quelconque des revendications 1 à 3, caractérisé en ce que la bande passante spectrale de la source lumineuse (2) collimatée est de l'ordre d'une dizaine d'angströms.

5. Dispositif viseur selon l'une quelconque des revendications 1 à 4, caractérisé en ce que la source lumineuse (2) comporte une matrice de cristaux liquides éclairée par un rayonnement laser.

6. Dispositif viseur selon l'une quelconque des revendications 1 à 5, caractérisé en ce que le miroir hors d'axe est plan.

7. Procédé de fabrication du miroir pour un dispositif viseur selon la revendication 1, caractérisé en ce qu'il comporte des moyens (9 à 13) générateurs d'ondes planes (7 et 8) servant à former deux sources lumineuse constituées de rayons parallèles orientés dans des directions différentes ($\alpha 2, \alpha 1$) par rapport à la normale N à ce miroir (5) en son milieu et correspondant aux angles directeurs.

11

8.Prodédé de fabrication du miroir pour un dispositif viseur selon la revendication 1, caractérisé en ce qu'il comporte des moyens (9,10,12,13) générateurs d'ondes sphériques servant à former deux sources lumineuses monochromatique, cohérentes, ponctuelles (7.1, 8.1) situées à des distances (D et D') du centre (R) du miroir (5) égales respectivement aux distances séparant dans l'utilisation du dispositif viseur le milieu (R) du miroir (5) de la position normale d'observation d'une part, et ce même milieu du point de convergence (O') des rayons extrêmes utiles avant réflexion d'autre part, et ceci dans des directions différentes (α2, α1) par rapport à la normale (N) à ce miroir (5) en son milieu et correspondant aux angles directeurs.

# Fig.1

0104115

FIG_5

3/3

FIG_6